# EUROPEAN PATENT APPLICATION

(11) **EP 4 748 759 A1**
(43) Date of publication of application: **27.05.2026**
(21) Application number: 24214137.2
(22) Date of filing: 20.11.2024
(51) Int. Cl.: B65G 47/14

(54) **TOP FEEDING PORTION OF AN AUTOMATED FEEDING DEVICE, AUTOMATIC FEEDING DEVICE FOR ROBOTS AND AUTOMATIZATION MEANS, METHOD FOR PICKING UP OF AT LEAST ONE PART FROM AN AUTOMATED FEEDING DEVICE COMPRISING A TOP FEEDING PORTION**

(71) Applicant: Tkmatik Sp.z.o.o., 80-124 Gdansk (PL)
(72) Inventor: Kielbinski, Karol, 80-124 Gdansk (PL)
(74) Representative: AOMB Polska Sp. z.o.o.

(57) **Abstract**

The invention provides an automated feeding device for robots and automatization means, comprising a frame (1) and a feeding surface (2) intended for parts (3) to be fed, the feeding surface (2) being coupled with rotation means for moving of the feeding surface (2) within the plane in which the parts (3) being fed are positioned, **characterized in that** it comprises at least a rotary brush (4) arranged for positioning of the parts (3) to be fed on the feeding surface (2), the feeding surface (2) comprising tufts of bristle (5) regularly spaced apart.

## Description

### Field of the Invention

The invention provides a top feeding portion of an automated feeding device, in particular a turntable, an automated feeding device for robots and automatization means, and a method for picking up of at least one part from an automated feeding device. The solution according to the invention is applicable in automated production processes, but first of all as one of the production line elements, packing or assembling ones, where flexible robotized systems are used.

### Prior Art

Modern production lines, where often high flexibility of production is required, i.e. ability to adapt according to the changing production targets such as product size and production volume, usually use flexible robotized systems. Robots suitable for fast and autonomous changeovers supported by vision systems enable rapid adaptation. The problem with such systems is the speed at which parts are picked up from standard feeders. Vision systems with good illumination also require free positioning of parts within the area where they are picked up from the automatic feeding device, which improves the process of identifying and locating parts in space. In particular, a significant proportion of the standard pickers used by robots require greater freedom for picking parts up.

From the prior art, the solution according to the patent no. EP2337757 is known. The patent discloses an automatic feeding device for robots and automatization means, equipped with a bed intended for feeding parts in a production process, and a means to generate impulses perpendicularly to the bed surface. As a result of such generated impulses, the parts positioned on the bed begin jumping and changing their orientation in space. The parts move around the bed surface in a continuous manner, and when they are picked up continuously from it smooth production is maintained and the space necessary for this process step is minimized.

One of the problems with the proposed solution is that as a result of the movement of the parts by generated impulses they may get damaged still during the feeding process.

### Summary of the Invention

It is the object of the invention to provide an automated feeding device for robots and automatization means which possesses all the advantages of the existing solution but also provides a product-safe and fast process for picking up of parts in a robotized system and minimizes the number of products damaged in the process.

The subject-matter of the invention is a top feeding portion of an automated feeding device for robots and automatization means intended for parts to be fed, characterized in that it comprises a horizontal feeding surface with tufts of bristle regularly spaced apart.

The Inventors noted particular advantages that provide considerable reduction of products damaged in the process of feeding parts on horizontal surfaces caused by movement of the parts on the feeding surfaces provided with tufts of bristle which not only cushion the parts moving thereon, but also limit excessive movement of the parts on the feeding surface. Additionally, the tufts of bristle ensure separation, on the feeding surface, of the parts being fed, and this facilitates recognition of the parts by vision systems and picking the parts up by industrial robots.

Preferably, the tufts of bristle are spaced apart at a distance enabling accommodating individual parts therebetween.

The Inventors also note a particularly advantageous variety of the solution in which the spacing of the tufts of bristle enables the parts to be seated between the tufts, especially for oval parts with a tendency to roll. In this manner the parts to not move excessively, and thus they do not bounce in the feeding process while the feeding surface remains in motion.

Preferably, the tufts of bristle extend vertically from the feeding surface.

The use of vertically extending tufts of bristle enlarges the effective carrying volume for the parts and this enables increase in the speed of the feeding process.

Preferably, the top feeding portion is made of plastics with tufts of bristle mounted within recesses provided on the feeding surface, arranged in an array.

The Inventors note that the use of a feeding surface made of plastics enables fast and simple change-over of the device, adjustment of the spacing of the bristle tufts array and the height of the tufts of bristle suitably to the parts being fed.

Preferably, the top feeding portion is made of polyethylene, and the bristle is made of polyamide.

The Inventor noted parameters of the polyethylene top feeding portion and polyamide bristle particularly advantageous for the process. These materials enable simple and durable fastening of the bristle to the base, long service life and proper cushioning of the parts in the feeding process.

Preferably, the feeding surface is flat and it has a round contour.

The Inventors noted that picking up parts by a robot from a flat surface is an easier and more effective process. This is a particularly advantageous geometry to enable continuous operation of the device and it does not cause aggregation of parts in one area of the feeding surface. The round contour is the most advantageous geometry with regard to specific intended use of the top feeding portion as an element which is mounted on turntables.

Preferably, the top feeding portion has mounting openings in its central region.

Additional openings enable the top feeding portion to be fastened to the turntable by means of standard screwed connection out of the feeding area, and thus the latter moves along with the table, with no risk of shifting.

Preferably, the top feeding portion comprises an outer tongue and/or inner tongue that surround the feeding surface.

The tongues minimize the risk for the parts to fall out the feeding surface.

The subject-matter of the invention is an automated feeding device for robots and automatization means, comprising a frame and a top feeding portion intended for parts to be fed, the top feeding portion being coupled with rotation means for moving the top feeding portion within the plane for positioning of the parts being fed.

The automated feeding device is characterized in that it comprises a top feeding portion according to the above description.

The advantages related to it are analogous as mentioned above.

Preferably, the automated feeding device comprises at least one rotary brush arranged for positioning of the parts being fed on the top feeding portion, which brush is positioned with the working surface of the brush parallel to the feeding surface, wherein the tangential direction of the rotational movement of the brush and the tangential direction of the feeding surface are directed in opposite directions.

The Inventors noted particular advantages issuing from the movement of the parts by the bristle of the rotary brush on the bristle of the feeding surface. In this manner the parts move in chaotic directions, and then their movement is limited by the tufts of bristle to enable positioning of the parts within the space of the surface of the feeding portion to avoid formation of aggregation. The parts become easy to be localized by vision systems and to be picked up in an automated feeding process.

The coupled and opposite tangential directions of the rotational movement of the brush and the feeding surface ensure effective inserting of a part between the rotary brush and the feeding surface, and as a result parts become either inserted between the tufts of bristle or moved into other areas of the feeding surface, and upon further passes of the parts under the rotary brush they are inserted again between the tufts of bristle as long as it takes.

Preferably, the feeding surface is encircled by at least one guard.

Guards minimize the risk of parts falling out of the top feeding portion.

Preferably, the rotary brush is a segmented cylindrical brush with radially extending bristle, it is positioned in parallel with the feeding surface and radially relative to the turntable, and the length of the working surface of the rotary brush is adjusted to the working width of the feeding surface.

It is possible to use commonly available segmented cylindrical brushes, being a cost-efficient solution.

Particularly preferably, the rotary brush comprises a shaft with a regular polygon cross-section, and bristle attached in parallel with the side surfaces of the shaft, where the length of the working surface of the rotary brush is adjusted based on the working width of the feeding surface.

The present Inventors note that the use of this geometry of the rotary brush ensures a better approach angle towards the parts, and a result the parts may be seated and pushed through more effectively.

Preferably, the automated feeding device comprises a conveyor and/or a vision system means and picking-up means for picking up of at least one of the parts, controlled by the vision system means.

It is possible to integrate the feeding device with a conveyor, as well as with a vision system means and a robot, and thus the device within a confined space will be able to provide filly automated and precise feeding parts for further technological processes.

The subject-matter also includes a method for picking up of at least one part from an automated feeding device according to the above described solution by a robot, said method comprising the following steps:
- loading a feeding surface of an automated feeding device with parts to be picked up;
- selecting at least one of the parts to be picked up by a vision system means in order to recognize the parts to be picked up, the vision system means being coupled with a feeder;
- collecting at least one of the parts to be picked up, wherein during the sequence of the mentioned steps the parts to be picked up are moved in a continuous manner;
- a step of change in spatial orientation of the parts to be picked up on the feeding surface is included,
and being characterized in that the step of the changing of the spatial orientation comprises dispersing of the parts via displacement of the parts on the tufts of bristle and therebetween on the top feeding portion being in rotational motion, with a rotary brush which rotates above the feeding surface.

In this manner loading of the feeding surface with the parts to be picked up is carried out in a continuous manner and all the aforementioned advantages of the preceding solutions also apply to the method.

### Brief Description of the Drawings

The object of the invention will be presented in more detail in a preferable embodiment with reference to the enclosed drawings where:
Fig. 1 Automated feeding device.
Fig. 2 Automated feeding device - front view with indication of the section A-A.
Fig. 3 Automated feeding device - cross-sectional view according to A-A of the feeding surface.
Fig. 4 Top feeding portion for an automated feeding device.
Fig. 5 Top feeding portion for an automated feeding device - side view.
Fig. 6 Automated feeding device without a frame, with a conveyor for parts and a robot.
Fig. 7 Automated feeding device - visualization of distribution of parts on the top feeding portion.

### Detailed Description of Preferable Embodiment of the Invention

It is noted that in the description of the figures, same reference numerals refer to the same of similar components performing a same of essentially similar function.

A more detailed description is made with reference to particular examples, some of which are illustrated in the appended drawings, such that the features of the present disclosure may be understood in more detail. It is noted that the drawings only illustrate typical examples and are therefore not to be considered to limit the scope of the subject matter of the claims. The drawings are incorporated for facilitating an understanding of the disclosure and are thus not necessarily drawn to scale. Advantages of the subject matter as claimed will become apparent to those skilled in the art upon reading the description in conjunction with the accompanying drawings.

The ensuing description above provides preferred exemplary embodiment(s) only, and is not intended to limit the scope, applicability, or configuration of the disclosure. Rather, the ensuing description of the preferred exemplary embodiment(s) will provide those skilled in the art with an enabling description for implementing a preferred exemplary embodiment of the disclosure, it being understood that various changes may be made in the function and arrangement of elements, including combinations of features from different embodiments, without departing from the scope of the disclosure.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected", "coupled" or any variant thereof means any connection, either direct or indirect, between two or more elements; the connection between the elements can be physical, logical, electromagnetic, or a combination thereof. Additionally, the words "herein," "above," "below," and words of similar import, when used in this application, refer to this application as a whole and not to any particular portions of this application. Where the context permits, words in the Detailed Description using the singular or plural number may also include the plural or singular number respectively. The word "or" in reference to a list of two or more items, covers all the following interpretations of the word: any of the items in the list, all of the items in the list, and any combination of the items in the list.

According to the invention, a top feeding portion 2 of an automated feeding device for robots and automatization means is provided.

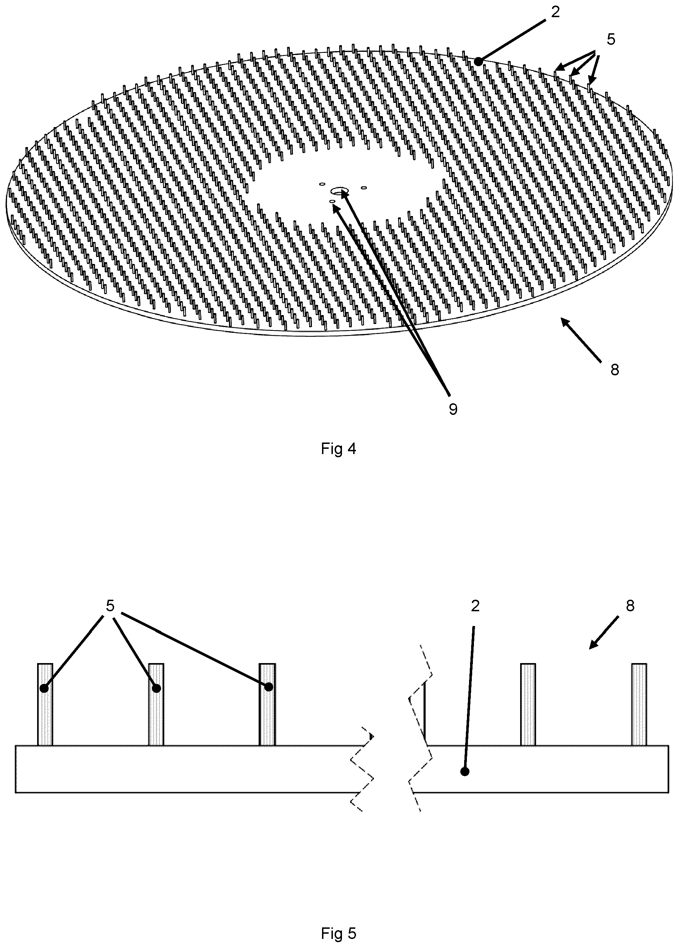

Fig. 4 and fig. 5 shows a top feeding portion 2 made of polyethylene, with tufts of bristle 5 made of polyamide and mounted on a horizontal feeding surface 21 within recesses arranged in an array. The feeding surface 21 is flat and it has a round contour. The tufts of bristle 5 extend perpendicularly upward from the feeding surface 2. The spacing distances and the height of the tufts of bristle 5 are sufficient for the supplied parts 3 to be able to fall individually into the spaces between the tufts of bristle 5 and remain locked in a manner that prevents free movement resulting for example from rotation of the top feeding portion 2. In an embodiment, the tufts of bristle 5 with a height of 20 m and spacing of 19 mm for the parts 3 with a diameter of 20 mm are contemplated. The top feeding portion 2 has mounting openings 9 in its central region. The top feeding portion 2 can be configured as a monolithic element, e.g. a mat equipped with tufts of bristle 5, or it can be made up of an assembly of elements that together form a common plane - the horizontal feeding surface 21.

According to the invention, there is provided an automated feeding device for robots and automatization means, comprising a frame 1 and the top feeding portion 2 intended for parts 3 to be fed, the top feeding portion 2 being coupled with rotation means 61 for moving of the top feeding portion 2 within the plane for positioning of the parts 3 being fed.

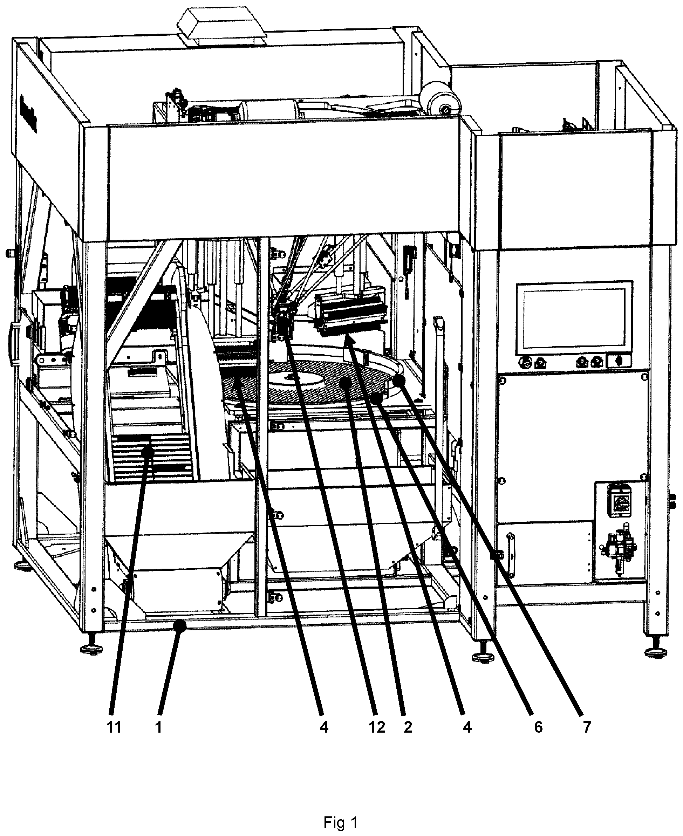

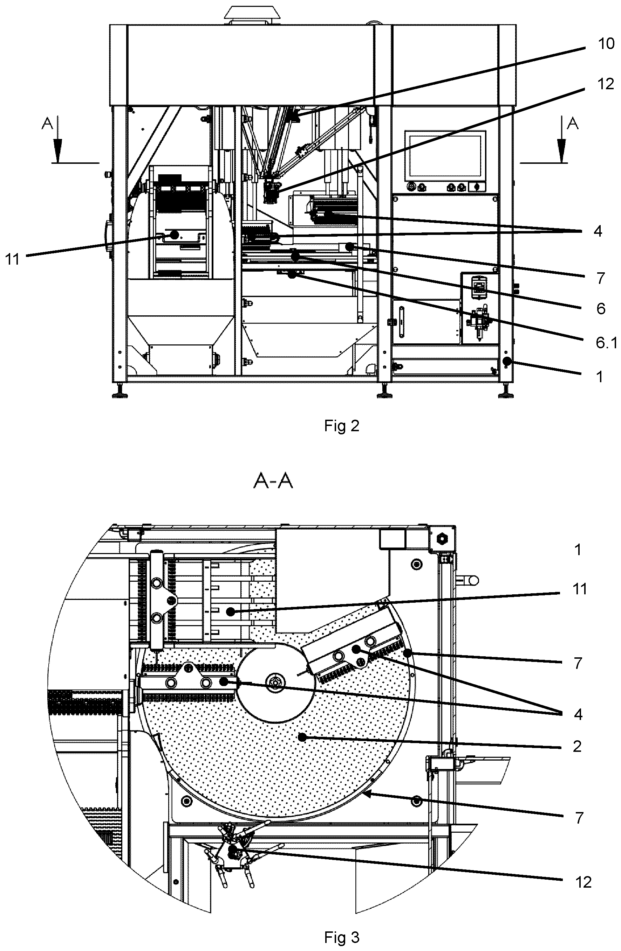

In the embodiment described in the drawing of fig. 1, fig. 2 and fig. 3, an automated feeding device comprises two rotary brushes 4 intended for positioning of the parts 3 to be fed on the feeding surface 2. The top feeding portion 2 comprises tufts of bristle 5 regularly spaced apart. In this embodiment, the feeding surface 21 is flat and has a round contour, it is also a surface of a turntable 6 installed in the frame 1 of the device and it is encircled by a guard 7. The rotary brushes 4 are segmented cylindrical brushes with radially extending bristle and they are arranged with a working surface of the rotary brush 4 parallel with the feeding surface 21. The axis of rotation of the rotary brush 4 is perpendicular to the axis of rotation of the feeding surface 21 and radially relative to the axis of the rotary table 6. The tangential direction of the rotational movement of the brush A and the tangential direction of the surface B are oposite. The rotary brushes 4 are suspended from telescopic arms 13 with an adjusted height. The automated feeding device comprises pick-up means 12 for picking up at least one part 3, formed as an industrial robot of a pick&place type, which is controlled by vision system means 10. The vision system means 10 have a form of a camera suspended from the ceiling over to the feeding surface 21 and perpendicularly thereto. At the turntable 6 there is a conveyor 11 the role of which is automated delivery of the parts 3 onto the feeding surface 21.

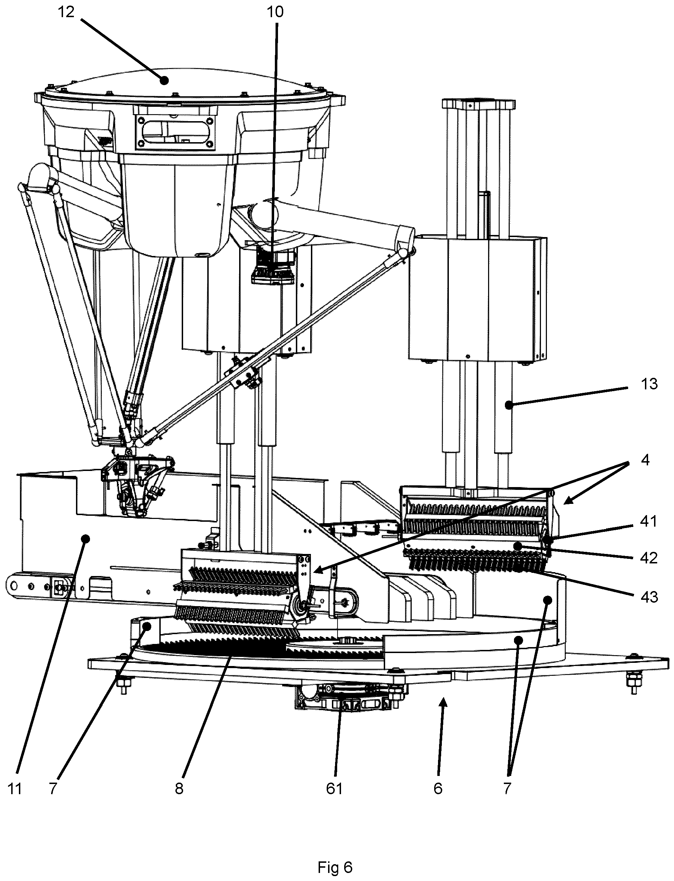

Fig. 6 shows the automated feeding device, without a frame, as described above, with different versions of the rotary brushes 4 and the top feeding portion 2. The rotary brushes 4 comprise a shaft 41 with a shape of a regular polygon in cross-section, and bristles 43 attached in parallel with the side surfaces 42 of the shaft 41, where the length of the working surface of the rotary brush 4 is adjusted based on the length of the radius of the feeding surface 21. The top feeding portion 2 has a form of a mat of plastics with tufts of bristle 5 mounted within recesses arranged in an array, where the tufts of bristle 5 extend vertically from the feeding surface 21 of the mat.

According to the invention, a method for picking up of at least one part from the automated feeding device by a robot is provided, said method comprising the following steps:
- loading the feeding surface 2 of the automated feeding device with parts 3 to be picked up,
- selecting at least one of the parts 3 to be picked up by the vision system means 10 in order to recognize the parts to be picked up, the vision system means 10 being coupled with a feeder,
- collecting at least one of the parts 3 to be picked up, wherein during the sequence of the mentioned steps the parts 3 to be picked up are moved in a continuous manner,
- a step of change in spatial orientation of the parts 3 to be picked up on the feeding surface 2 is included,

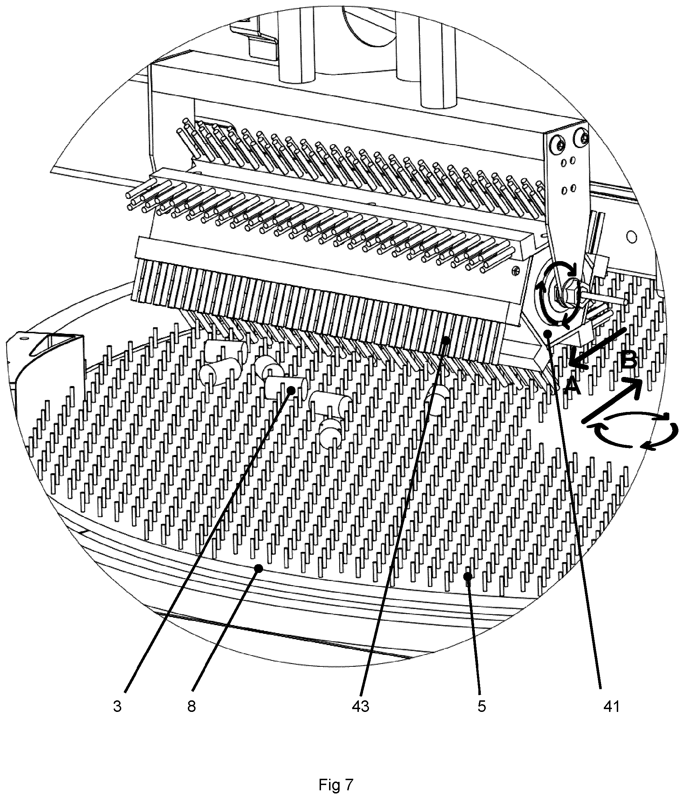

The step of the changing of the spatial orientation comprises dispersing of the parts 3 to be picked up via displacement of the parts 3 on the tufts of bristle 5 of the top feeding portion 2 in motion, with the rotary brush 4 which rotates above the feeding surface 21and locking individual parts 3 within the spaces between the tufts of bristle 5, as shown in fig. 7.

Loading a feeding surface 2 with parts 3 to be picked up is carried out in a continuous manner by a conveyor 11.

### List of references in the Drawings:

- 1: Frame
- 2: Top feeding portion
- 21: Feeding surface
- 3: Part (being fed)
- 4: Rotary brush
- 41: Shaft (of the rotary brush)
- 42: Side surfaces (of the shaft)
- 43: Bristle (of the rotary brush)
- 5: Tufts of bristle
- 6: Turntable
- 61: Rotation means (of the turntable)
- 7: Guard
- 9: Mounting openings
- 10: Vision system means
- 11: Conveyor
- 12: Picking-up means
- 13: Telescopic arms
- A: Tangential direction of the brush rotational motion
- B: Tangential direction of the feeding surface

## Claims

1. A top feeding portion of an automated feeding device for robots and automatization means intended for parts (3) to be fed **characterized in that** it comprises a horizontal feeding surface (21) with tufts of bristle (5) regularly spaced apart.

2. The top feeding portion according to claim 1, **characterized in that** the tufts of bristle (5) are spaced at a distance to enable accommodating single parts (3) therebetween.

3. The top feeding portion according to claims 1 or 2, **characterized in that** the tufts of bristle (5) extend vertically from the feeding surface (21).

4. The top feeding portion according to claims 1 or 2 or 3, **characterized in that** it is made of plastics, with tufts of bristle (5) mounted within recesses positioned on the feeding surface (21) and arranged in an array.

5. The top feeding portion according to claims 1 or 2 or 3 or 4, **characterized in that** the feeding surface (21) is made of polyethylene and the bristle (5) is made of polyamide.

6. The top feeding portion according to claims 1 or 2 or 3 or 4 or 5, **characterized in that** the feeding surface (21) is flat and has a round contour.

7. The top feeding portion according to at least one of claims from 1 to 6, **characterized in that** it comprises mounting openings (9) in its central region.

8. The top feeding portion according to at least one of claims from 1 to 7, **characterized in that** it comprises an outer tongue and/or inner tongue which surround the feeding surface (21).

9. An automated feeding device for robots and automatization means, comprising a frame (1) and a top feeding portion (2) intended for parts (3) to be fed, the top feeding portion (2) being coupled with rotation means (61) for moving of the top feeding portion (2) within the surface for positioning of the parts (3) being fed **characterized in that** it comprises the top feeding portion (2) according to at least one of the above claims.

10. The automated feeding device according to claim 9, **characterized in that** it comprises at least one rotary brush (4) intended to position the parts (3) being fed on the top feeding portion (2) which is positioned with the working surface of the brush (4) parallel to the feeding surface (21), wherein the tangential direction of the rotational movement of the brush (A) and the tangential direction of the surface (B) are directed in opposite directions.

11. The automated feeding device according to claims 9 or 10, **characterized in that** the feeding surface (2) is encircled by at least one guard (7).

12. The automated feeding device according to at least one of claims from 9 to 11, **characterized in that** the rotary brush (4) is a segmented cylindrical brush with radially extending bristle (43), and the length of the working surface of the rotary brush (4) is adjusted to the working width of the feeding surface (2).

13. The automated feeding device according to at least one of claims from 9 to 12, **characterized in that** the rotary brush (4) comprises a shaft (41) with a shape of a regular polygon in cross-section, and bristles (43) attached in parallel with the side surfaces (42) of the shaft (41), where the length of the working surface of the rotary brush (4) is adjusted based on the working width of the feeding surface (2).

14. The automated feeding device according to at least one of claims from 9 to 13, **characterized in that** it comprises a vision system means (10) and picking-up means (12) for picking up of at least one of the parts (3), controlled by the vision system means (10).

15. A method for picking up of at least one part from an automated feeding device according to at least one of claims from 9 to 14 by a robot, the method comprising the following steps:
- loading a feeding surface (2) of an automated feeding device with parts (3) to be picked up,
- selecting at least one of the parts (3) to be picked up by a vision system means (10) in order to recognize the parts (3) to be picked up, the vision system means (10) being coupled with a feeder,
- collecting at least one of the parts (3) to be picked up, wherein during the sequence of the mentioned steps the parts (3) to be picked up are moved in a continuous manner,
- changing the spatial orientation of the parts (3) to be picked up on the feeding surface (2),
**characterized in that:**
the step of the changing of the spatial orientation comprises dispersing of the parts (3) via displacement of the parts (3) on the tufts of bristle (5) and therebetween on the top feeding portion (2) being in motion, with a rotary brush (4) which rotates above the feeding surface (2).
